**Europäisches Patentamt**

**European Patent Office**

**Office européen des brevets**

(11) Publication number: **0 060 453**
**A2**

## EUROPEAN PATENT APPLICATION

(21) Application number: **82101695.3**

(22) Date of filing: **04.03.82**

(51) Int. Cl.³: **B 23 B 29/034**

(30) Priority: **18.03.81 US 245199**

(43) Date of publication of application: **22.09.82**
**Bulletin 82/38**

(84) Designated Contracting States: **BE CH DE FR GB IT LI NL SE**

(71) Applicant: **KEARNEY & TRECKER CORPORATION, 11000 Theodore Trecker Way, West Allis Wisconsin 53214 (US)**

(72) Inventor: **Kielma, Ervin J., 2536 South 64 Street, West Allis Wisconsin 53219 (US)**

(74) Representative: **Baillie, Iain Cameron et al, c/o Ladas & Parry Isartorplatz 5, D-8000 München 2 (DE)**

(54) **Numerically controlled cross-feed facing unit for multiple spindle head machine tools.**

(57) A cross-feed facing unit for use on a multiple spindle head machine tool includes a frame (28) into which a hollow bore spindle (40) is rotatably journaled. Integrated to the end of the spindle (40) distal from the fram (28) is a flange fastened to which is a housing (36). The housing has a slot or channel (92) inscribed therein which extends diametrically across the housing so as to be in communication with the spindle bore (78). A tool-carrying cross-feed facing slide (97) is disposed in the channel (92), in the housing (36) and is reciprocated diametrically across the housing by a drawbar (108) disposed in the spindle bore (78). When the drawbar (108) is reciprocated along the axis by the motor (152) under numerical control, the drawbar (108) rotatably drives a set of pinion gears (106a, 106b, 106c, 106d) each journaled in the bore (78) of the spindle (40) so that one of the pinion gears (106a) meshingly drives a rack (102) on the underside of the slide (97) to bias the rack and the slide within the housing channel (92).

- 1 -

This invention relates generally to numerically controlled multiple spindle head machine tools and, more specifically, to a numerically controlled cross-feed facing unit for use on a multiple spindle head machine tool for performing profiling and contouring machining operations.

Numerically controlled multiple spindle head machine tools of the type having a plurality of spindle heads rotatably indexable between a storage position and an operating position are commonly referred to as "head indexers" and are well known in the art. U.S. Patent No. 3,760,472, describes a particularly useful head indexer type numerically controlled machine tool which comprises a bed or base on the upward facing surface of which is a turntable which is rotatably indexable about a centrally located column extending from the base. Within the column is a rotary power station whose output shaft is horizontally journaled through the column so as to lie along a turntable radii which is parallel to a set of ways fastened on the base in spaced apart parallelism adjacent to the turntable. The ways support a workpiece holding table which is slidable on the ways for movement there-along to and from the turntable. A plurality of spindle heads are mounted on the turntable in spaced apart relationship. Each spindle head has one or more cutting tool-carrying spindles rotatably journaled therein so as to extend therebeyond along a turntable radii. The spindles in each spindle head are rotatably driven through a power receiving shaft rotatably journaled in the spindle head when the turntable is indexed to position the spindle head opposite to the power station so that the power receiving shaft matingly engages the power station output shaft.

While present day head indexer type numerically controlled machine tools, such as the numerically controlled head indexer described in the aforementioned patent, permit a variety of machining operations, such as drilling and tapping, to name a few, to be performed in rapid succession on a workpiece to facilitate relatively high volume part production, certain machining operations, such as profiling and contouring are not able to be performed on a workpeice by such head indexer type machine tools because neither the spindle head, nor the cutting tool-carrying spindles in the spindle head of present day head indexer machine tools can move in a direction transverse to the axis of spindle rotation during machining operations. Thus, to complete machining operations such as profiling or contouring, it is usually necessary to turn the workpiece on a separate machine. If the workpiece is irregularly shaped, such as the case where the workpiece comprises an axle housing or the like, then clamping and vibrational problems are likely to arise when the part is turned, making part production more complex and thus, more expensive.

Accordingly, the object of the present invention is to provide an improved numerically controlled, mutliple spindle head machine tool having a cross-feed facing unit thereon which is capable of completing profiling and contouring machining operations.

The present invention provides a cross-feed facing unit adopted to be mounted on a numerically controlled machine tool in operating position to be driven by a drive unit of the machine tool; comprising a tool supporting head; power means connection to move said head into the operating position and a rotary spindle journaled in said head and connected to be rotated by the operation of said drive unit when said head is moved into its operating position on the machine tool; characterized by a slide mounted on the end of said spindle in a plane transverse to the axis of rotation of said spindle so that it rotates with said spindle, said slide being movable in a rectilenear path relative to the axis of said spindle; a turning tool secured to said slide for movement therewith so that it can be rotated in an orbit to perform a turning operation on a workpiece; power means connected to actuate said slide in its rectilinear path to adjust the position of said turning tool relative to the axis of said spindle for changing the diameter of its orbit; and means coupling said power means to the numerical control of the machine tool so that the movement of said slide can be adjusted automatically.

In a preferred embodiment the cross-feed facing unit is fastened to the rotatably indexable turntable of the machine tool for movement between a storage position and an operating position adjacent to a centrally located machine tool power station. Rotatably journaled into the frame perpendicular to the power station is the spindle having a hollow bore and having a flanged end distal from the frame. The slide is preferably slidably mounted in a slot or channel inscribed diametrically across the face of a plate which is fastened to the flanged end of the spindle, the back of the slide being in communication with the bore disposed through the spindle. The slide reciprocated in the channel diametrically across the plate by a drawbar seated in a spindle bore. The drawbar has a toothed rack at the end thereof closest to the plate for meshing engagement with one of a set of pinion gears each journaled in the bore of the spindle for rotation about an axis perpendicular to the axis of spindle rotation. Each pinion gear meshingly engages an adjacent pair of pinion gears so that, as the drawbar is reciprocated along its axis by a motor under control of the machine tool N/C control system, the pinion gears each rotate, causing the pinion gear closest to the cross-feed facing tool-carrying slide to engage a toothed rack on the undersurface of the slide to drive the slide along across the plate. Extending from the frame opposite to the spindle is an input shaft which is coupled to the spindle through a cluster gear. When the turntable on which the frame is fastened is indexably positioned adjacent to the power station so that the input shaft matingly engages the output shaft of the power station, rotational energy will be transmitted to the spindle through the cluster gear. By regulating the excitation of the motor reciprocating the drawbar in the spindle during spindle rotation, the cross-feed facing tool-carrying slide can be indexed across the face of the flanged end of the spindle during intervals of spindle rotation to permit profiling and contouring machining operations.

The preferred embodiment of the invention will now be described with reference to the accompanying drawings:

Figure 1 is a top or plan view of a numerically controlled, multiple spindle head machine tool which includes a cross-feed facing unit according to the teachings of the present invention;

Fig. 2 is a cross sectional view of the multiple spindle head numerically controlled machine tool of Fig. 1 illustrating the details of. the cross-feed facing unit of the present invention;

Fig. 3 is an end view of the cross-feed facing unit depicted in Fig. 2;

Fig. 4 is a cross sectional view of the cross-feed facing unit of Fig. 3 taken along lines 4-4 thereof;

Fig. 5 is a cross sectional view of the cross-feed facing unit of Fig. 2 taken along lines 5-5;

Fig. 6 is a simplified view of the cross-feed facing unit depicted in Fig. 2;

Fig. 7 is a cross sectional view of the cross-feed facing unit of Fig. 6 taken along lines 7-7; and

Fig. 8 is a block schematic diagram of the cross-feed facing unit of Fig. 1 showing the interconnection of the machine N/C circuit.

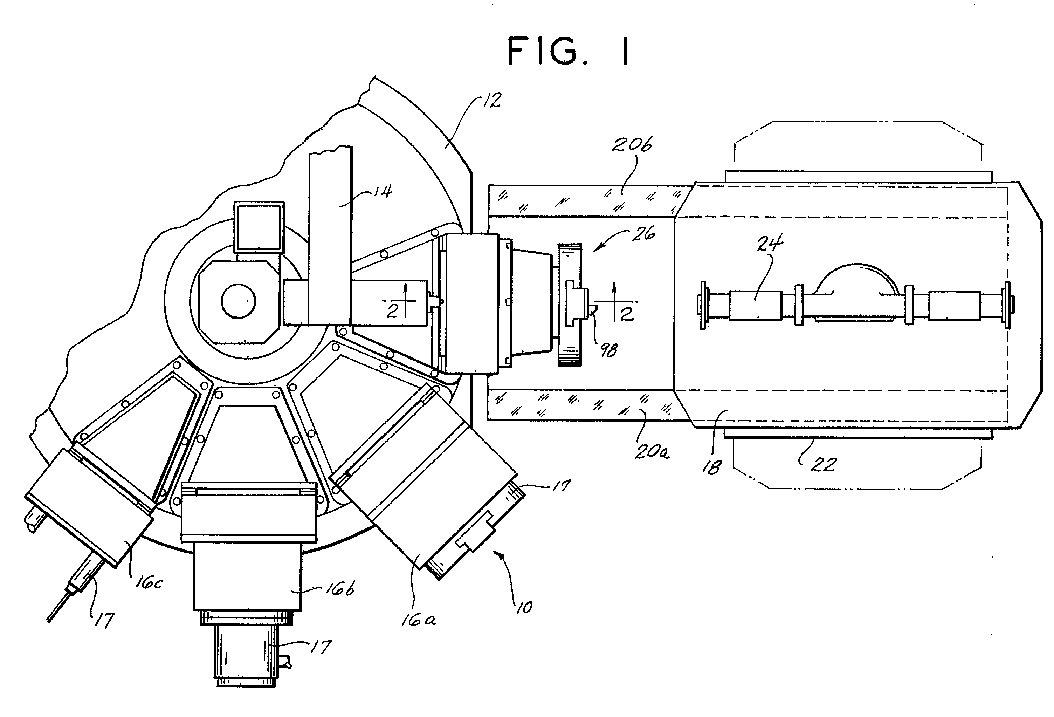

Fig. 1 illustrates the top or plan view of a numerically controlled multiple spindle head machine tool 10. Machine tool 10 comprises a turntable 12 which is rotatably indexable about a centrally located, vertically extending power station 14. A plurality of spaced apart spindle heads 16a, 16b and 16c are fastened on turntable 12 so that each lie along the turntable radii. Rotatably journaled into each spindle head is one or more cutting tool-carrying spindles 17. When turntable 12 is indexed to position a spindlehead such as spindlehead 16c, for example, opposite power station 14, then the cutting tool-carrying spindles rotatably journaled in the spindle head are rotatably driven by the power station. Following indexing of turntable 12 to position a spindle head opposite to the power station, the machine tool table 18, which is slidably supported on ways 20a and 20b fastened in spaced apart parallelism on base 22, is moved along the ways by suitable means (not shown) under control of the machine tool control system (not shown) to move a workpiece 24 fastened on the table against the rotatably driven cutting tool-carrying spindles of the spindle head then opposite to the power station to facilitate completion of a machining operation on the workpiece.

As previously indicated, prior art N/C multiple spindle head machine tools, such as the machine tool described above, are incapable of performing profiling or contouring operations on a workpiece because neither the cutting tool-carrying spindle nor the spindle head can

- 6 -

move in a direction transverse to the axis of cutting tool rotation. To overcome this difficulty, machine tool 10 is provided with a cross-feed facing unit 26 for performing profiling and contouring operations on workpiece 24 secured to machine tool table 18.

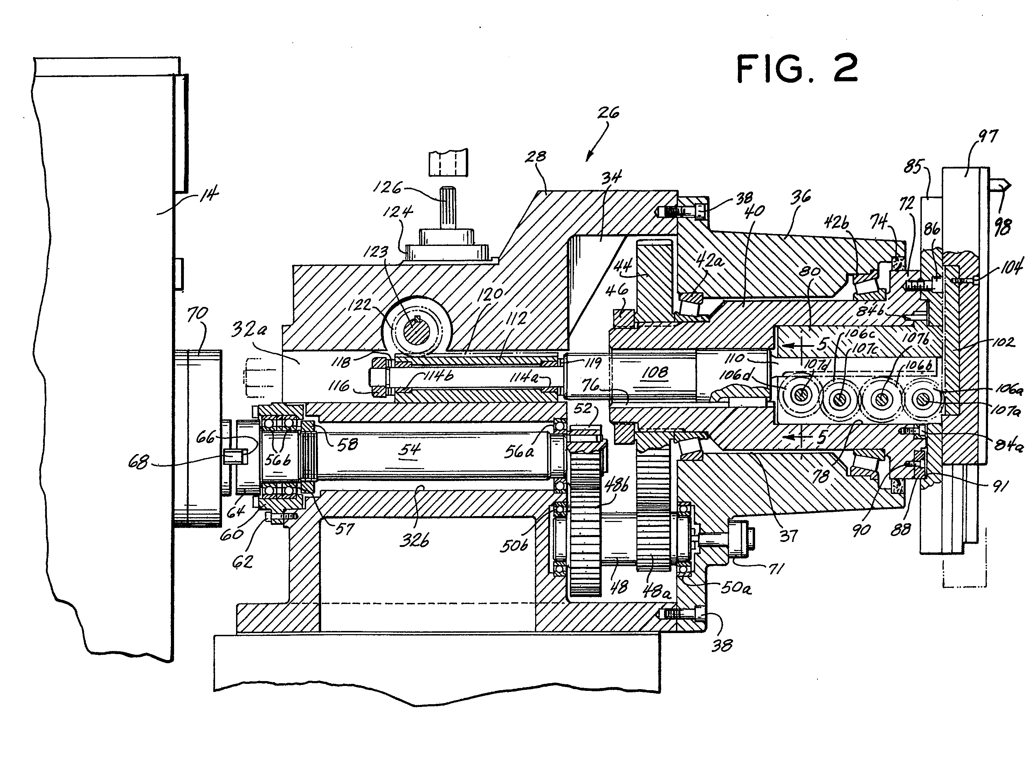

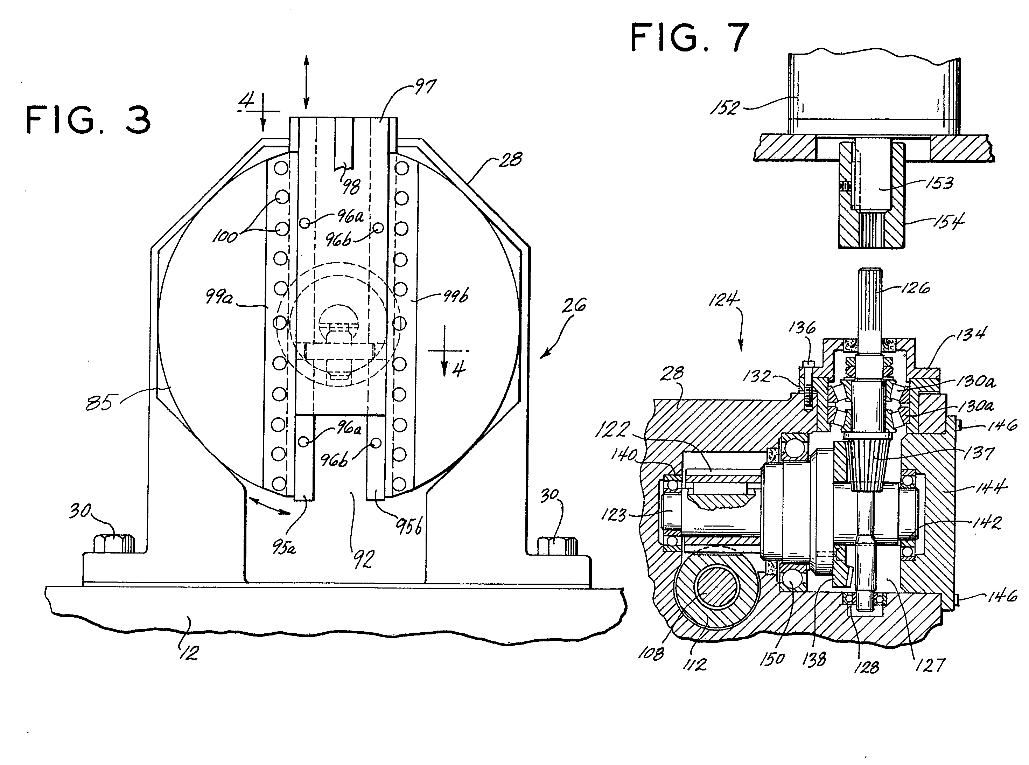

The details of cross-feed facing unit 26 are illustrated in Fig. 2 which is a cross sectional view taken along lines 2-2 of Fig. 1. Cross-feed facing unit 26 comprises a frame 28 which is fastened on turntable 12 by bolts 30 (Fig. 3) so as to lie along a line extending radially from power station 14. Frame 28 has a pair of horizontal longitudinal bores 32a and 32b disposed therethrough in spaced apart parallelism, each of the bores communicating with a large aperture 34 disposed in the rightward-most end of frame 28. An annular housing 36, having a bore 37 extending horizontally therethrough, is fastened to the rightward end of frame 28 by bolts 38 to overlie aperture 34 so that bore 37 through housing 36 is coaxial with bore 32a.

A spindle 40 is rotatably journaled in housing 36 by a pair of bearings 42a and 42b so that the leftward end of the spindle extends into aperture 34 of frame 28 so as to be co-axial with bore 32a. Spindle 40 carries adjacent to its leftward end a pinion gear 44 which is urged against the rightward edge of bearing 42a by a nut 46 which is in threaded engagement with the leftward spindle end. The rightward edge of bearing 42a abuts a shoulder on the spindle so that when nut 46 is threaded onto spindle 40 to abut pinion gear 44, axial movement of the pinion gear is prevented.

The rightward and leftward ends of a cluster gear 48 are journaled into the rightward end of frame 28 and the leftward end of housing 36, respectively, by a separate one of bearings 50a and 50b, respectively, so as to be parallel to spindle 40. A first cluster gear

0060453

- 7 -

member 48a on cluster gear 48 is located opposite to and is dimensioned complementary with pinion gear 44 on spindle 40 for meshing engagement therewith. The second cluster gear member 48b on cluster gear 48 meshingly engages a complementary pinion gear 52 carried on the rightward end of an input or driving shaft 54 rotatably journaled in bore 32b of frame 28 by bearings 56a and 56b. Bearing 56a is carried on the rightward end of shaft 54 between pinion gear 52 and a shoulder on the shaft. Bearings 56b are carried on the leftward end of shaft 54 between a spacer 57, urged against the lower bearing races by a nut 58 in threaded engagement with the shaft, and a shoulder extending radially from the interior bore of a hollow bore bearing cap 60 which is fastened by bolts 62 to the leftward most end of frame 28 so as to overlie bore 32b therethrough.

The left end of shaft 54, which extends through the bore of bearing cap 60, has a flange 64 integrated thereon. A keyway 66 is inscribed diametrically across the face of flange 64 for engagement with a complementary drive key 68 which is carried by the output shaft 70 of power station 14. Thus, when table 12 is rotatably indexed to position cross-feed facing unit 26 opposite to power station 14 so that drive key 68 engages keyway 66 spindle 40 is rotatably driven by the power station output shaft through shaft 54 and cluster gear 48. To assure that drive key 68 is always at the proper angular orientation to engage keyway 66 on the flanged end 64 of drive shaft 54, positioning means (not shown) such as are described in U.S. Patent 3,760,472, are disposed in power station 14 for stopping output shaft 70 in a predetermined angular position.

Fastened to housing 36 coaxial with cluster gear 48 is a lubrication pump 71 whose shaft extends into the housing for coupling to the cluster gear. When rotatably driven by cluster gear 48, lubrication pump 71 pumps lubricant through various ducts (not shown) in in frame 28 and housing 36 to lubricate the bearing contact surfaces. By driving lubrication pump 71 from a cluster gear 48, lubrication will always be pumped during intervals of spindle rotation, thereby avoiding bearing overheating.

Integrated to spindle 40 at its right end which extends from housing 36 is a flange 72. An oil seal 74 is disposed about the outer periphery of flange 72 between the flange and the inside wall of an opening in the rightward end of housing 36 coaxial with bore 37. Oil seal 74 serves a very important purpose: It seals the opening between flange 72 and housing 36 and thus prevents the entry of foreign material into housing 36.

Spindle 40 is hollow, having a bore 76 extending longitudinally therethrough. A second larger diameter bore 78 is disposed in the right end of spindle 40 coaxial with bore 76. Seated in bore 78 of spindle 40 is a sleeve 80 whose right end is flanged for attachment to spindle flange 72 by bolts 84a and 84b. A circular plate 85, having a bore therethrough dimensioned to receive the flanged end of sleeve 80, is fastened by bolts 86 (only one of which is shown) to spindle flange 72 so as to overlie sleeve 80. A radial key 88 is fastened to spindle flange 72 by bolt 90 for mating engagement with a complementary keyway 91 inscribed in plate 85. Key 88 and keyway 91 maintain driving engagement between spindle 40 and plate 85.

Referring now to Fig. 3 which is an end view of the cross feed facing unit of Fig.2, a channel 92 is inscribed into plate 85 diametrically across the plate so as to be in communication with the bore through plate 85. Within channel 92, there is a pair of parallel spaced apart ways 95a and 95b fastened to plate 85 by a respective one of bolts 96a and 96b. A cross-feed facing slide 97 is disposed in channel 92 and is slidable on ways 95a and 95b for movement diametrically across plate 85.

Slide 97 carries a cutting tool 98 on an outward facing surface thereof for machining a workpiece, such as workpiece 24 on table 18 (both illustrated in Fig. 1). A pair of guides 99a and 99b are fastened to plate 85 by bolts 100 so as to overlie each of the sides of channel 92, thereby retaining cross-feed facing slide 97 within the channel and in engagement with the ways 95a and 95b.

Referring back to Fig. 2, seated in a recess in the under-surface of slide 97 overlying the bore through plate 85 is a gear rack 102 which is fastened to slide 97 by bolts 104 (only one of which is shown). By virtue of its overlying the bore through plate 85, rack 102 is adjacent to, and in meshing engagement with, a first pinion gear 106a which is journaled in sleeve 80 adjacent to its rightward most end by a pin 107a for rotation about an axis perpendicular to the axis of spindle 40 rotation.

Second and third pinion gears 106b and 106c, respectively, are each rotatably journaled in sleeve 80 by a separate one of pins 107b and 107c, respectively, so as to be parallel to and in alignment with pinion gear 106a. Pinion gear 106b is adjacent to, and in meshing engagement with, each of gears 106a and 106c thus enabling rotational energy to be transmitted from pinion gear 106c through pinion gear 106b to pinion gear 106a. Pinion gear 106c is itself in meshing engagement with a fourth pinion gear 106d which is rotatably journaled in sleeve 80 by pin 107d so as to be parallel to, but elevated from, each of pinion gears 106a, 106b, and 106c. When pinion gear 106d is rotatably driven, it transmits rotational energy to pinion gear 106c, which in turn, transmits rotational energy to pinion gear 106b. Pinion gear 106b, when rotatably driven by pinion gear 106c, transmits rotational energy to pinion gear 106a, causing pinion gear 106a to reciprocate rack 102 and slide 97 in channel 92 (Fig. 3) along the ways 95a and 95b diametrically across plate 85.

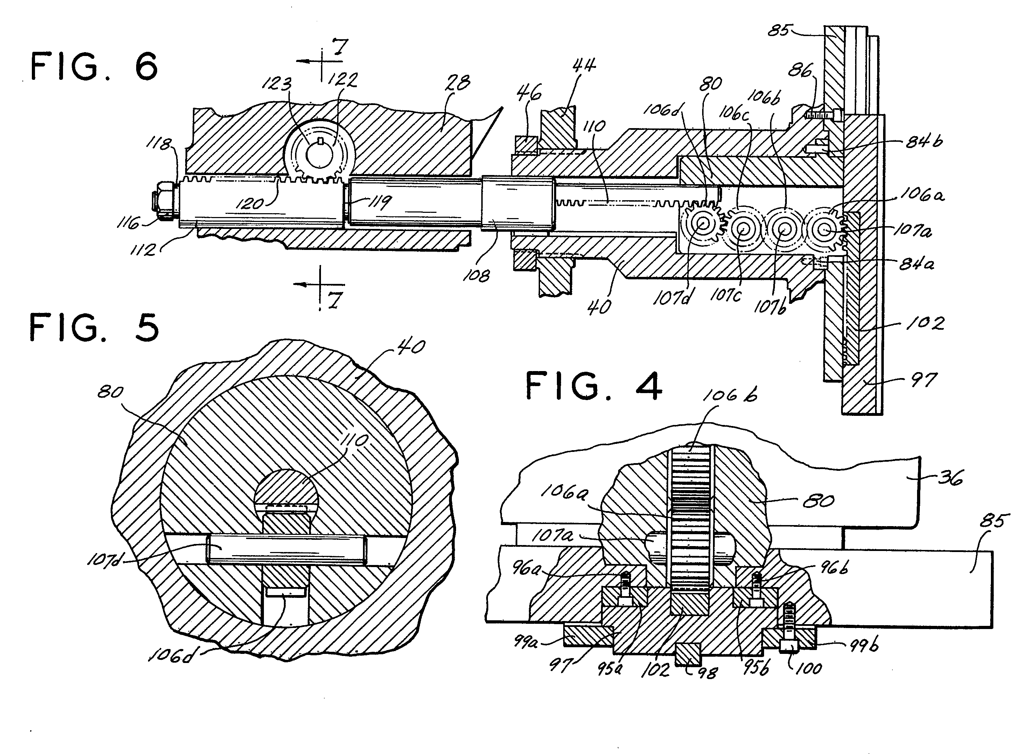

- 10 - A better understanding of the relationship between pinion gears 106a, 106b, and rack 102 on slide 97 may be gained by reference to Fig. 4, which is a cross sectional view of the cross-feed facing unit of Fig. 3 taken along lines 4-4 of Fig. 3. As illustrated, pinion gear 106a is rotatably journaled in sleeve 80 (which is seated in the bore of spindle 40) by pin 107a so that pinion gear 106a is in meshing engagement with both pinion gear 106b and rack 102 on slide 97. Rotatably driving gear 106b thus serves to drive gear 106a which, in turn, meshes with rack 102 to bias slide 97 along ways 95a and 95b with the channel in plate 85. Returning to Fig. 3, it can readily be seen that reciprocating slide 97 in the channel in plage 85 causes tool 98 to move transversely to the axis of plate 85 rotation.

Referring to Fig. 2, seated in aperture 32a in frame 28 and extending into bore 76 in spindle 40 is a drawbar 108. Integrated to the right end of drawbar 108 is a gear rack 110 which extends into sleeve 80 for meshing engagement with pinion gear 106d. The left end of drawbar 108 extends through a bushing 112 and is journaled in a pair of bearings 114a and 114b which are each seated in a separate bore in the right and left ends of bushing 112, respectively. Bushing 112 is restrained from moving axially on drawbar 108 by a nut 116 which threadedly engages the left end of drawbar 108 to urge a spacer 118 against the left end of the bushing to bias the bushing against a second spacer 119 which is in abutment with a shoulder on the drawbar.

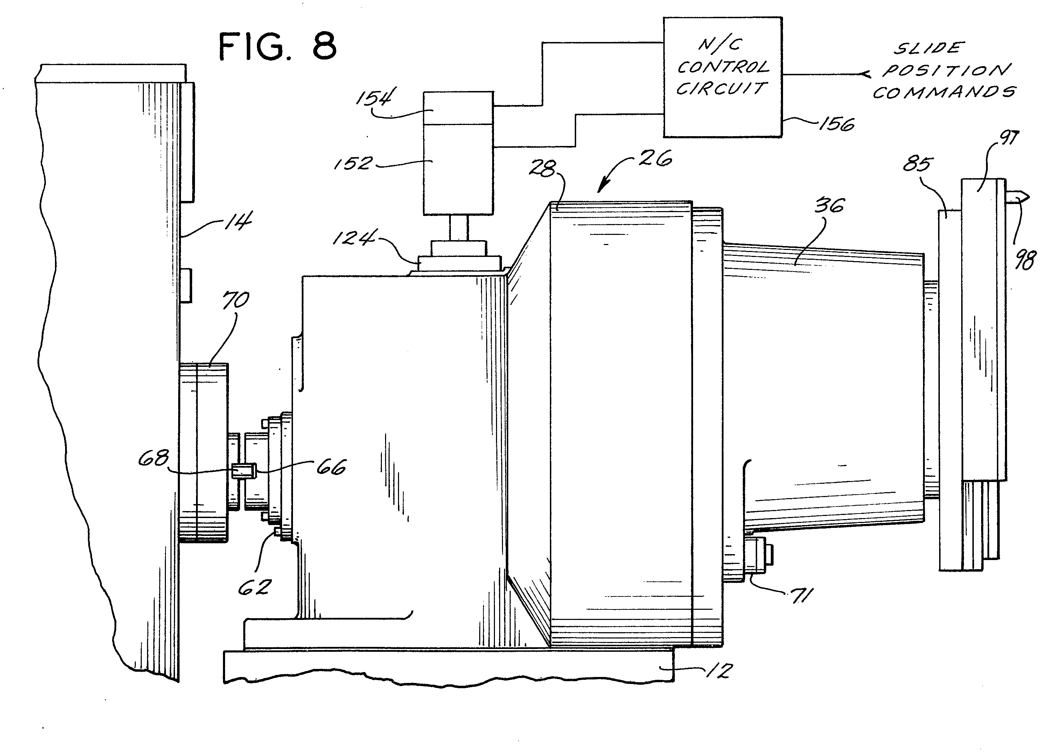

Bushing 112 has inscribed in its upper most surface a set of parallel spaced apart teeth 120, each tooth being perpendicular to the longitudinal drawbar axis. The teeth 120 of bushing 112 are in meshing engagement with the teeth on a gear 122 which is keyed on

- 11 -

the output shaft 123 of a right angle gear transmission 124 disposed in frame 28 and illustrated in greater detail in Fig. 7. When the input shaft 126 of right angle transmission 124 is rotatably driven, rotational energy is transmitted to output shaft 123 which, in turn, rotatably drives gear 122 to reciprocate drawbar 108 along its axis. As drawbar 108 is reciprocated along its axis, toothed rack 110, by virtue of its meshing engagement with pinion gear 106d as illustrated in Fig. 5, rotatably drives pinion gear 106d. Pinion gear 106d, when rotatably driven by rack 110 on drawbar 108, transmits the rotational energy imparted thereto through gears 106c and 106b to gear 106a. Gear 106a, when rotatably driven by gear 106b reciprocates slide 97 within the channel in plate 85.

To gain a better understanding of how the reciprocation of drawbar 108 within frame 28 serves to reciprocate slide 97 diametrically across plate 85, reference should be had to Figs. 2, 3 and to Fig. 4 which depicts a portion of the cross-feed facing unit illustrated in Fig. 2. As illustrated in Figs. 2 and 3, cross-feed facing unit 26 is fabricated such that when drawbar 108 is at its rightward position so that toothed rack 110 is wholly within sleeve 80, slide 97 will be at its radially outward most position in the channel in plate 85. Referring now solely to Fig. 2, when drawbar 108 is shifted leftwardly, toothed rack 110 withdraws from sleeve 80, thereby imparting a counterclockwise rotary motion to pinion gear 106d. Pinion gear 106d, when rotatably driven in a counterclockwise direction by rack 110, in turn, drives gear 106c in a clockwise direction which causes gear 106b to rotate in a counterclockwise direction. Gear 106b, when rotatably driven counterclockwise, drives gear 106a in a clockwise direction causing gear 106a to urge rack 102 and slide 97 radially inward.  Once drawbar 108 reaches its leftward most position so that nut 116 extends beyond frame 28 (as is illustrated in Fig. 6), rack 102 and slide 97 reach their radially inward most position.  By reciprocating drawbar 108 along its axis, slide 97 and cutting tool 98 thereon, can be reciprocated diametrically across plate 85.

The details of right angle transmission 124 are illustrated in Fig. 7 which is a cross sectional view taken along lines 7-7 of Fig. 6.  Input shaft 126 of right angle transmission 124 is journaled in the bottom of a vertical bore 127 in frame 28 by a ball bearing 128 carried on input shaft 126 at its bottom most end.  A pair of tapered roller bearings 130a and 130b, carried on shaft 126 near its upper most end, journal the shaft to a hollow sleeve 132 seated in bore 127 in the frame, so that the bore through the sleeve is co-axial to and in communication with bore 127.  Overlying the bore through sleeve 132 is a bearing cap 134 which has a passage therethrough dimensioned to receive shaft 126 so as to allow shaft 126 to extend therethrough.  Bolts 136 (only one of which is shown) extend through the flanged rim of bearing cap 134 and sleeve 132 to secure the bearing cap and the sleeve to frame 28.

Shaft 126 has a hypoid worm gear 137 medially integrated thereon for meshing engagement with a complementary hypoid worm wheel 138 which is carried on output shaft 123.  Output shaft 123 is horizontally journaled at its leftward most end in frame 28 by a bearing 140 for rotation about an axis perpendicular to both the axis of shaft 126 and the axis of transverse movement of drawbar 108.  The rightward most end of output shaft 123 is journaled by a bearing 142 into a bearing cap 144 fastened to the rightward most side of frame 28 by bolts 146 so as to overlie the opening through the frame into bore 127.  A third roller bearing 150 is medially carried on output shaft 123 adjacent to hypoid worm wheel 138 to journal the output shaft within frame 28.

As previously indicated, gear 122 is keyed on output shaft 123 so as to be in meshing engagement with the teeth on bushing 122 carried by drawbar 108. Gear 122 is rotatably driven by output shaft 123 to reciprocate drawbar 108 along its axis when the output shaft is rotatably driven through hypoid worm wheel 138 and hypoid worm gear 137 by input shaft 126. Input shaft 126 is rotatably driven by a motor 152 whose shaft 153 carries a universal coupling, the interior bore of which is splined complementary to the splines on input shaft 126 for mating engagement therewith.

Referring now to Fig. 8, motor 152 has attached thereto a feedback transducer 154 taking the form of a resolver which generates an electrical signal indicative of motor shaft angular position. Because constant synchronism is maintained between the motor shaft and the output shaft of transmission 124, the output signal of resolver 154 will be indicative of the diametric position of cross-feed facing slide 97 (Figs. 2, 3, 4 and 6) on plate 85 (Figs. 2 and 3). The motor and resolver are each coupled to a machine N/C control circuit 156, such as are well known in the art, which controls the excitation of motor 152 in accordance with slide position commands entered into the N/C control circuit and in accordance with feedback positioning information from resolver 154. In this manner, the motor 152 is servo controlled to assure accurate positioning of cross-feed facing slide 97 across plate 85 during spindle 40 (Fig. 2) rotation. As will be apparent to those skilled in the art, movement of slide 97 across plate 85 can readily occur even while spindle 40 is rotating since drawbar 108 is free to rotate within toothed bushing 112 (Figs. 2 and 6) even while the toothed bushing and the drawbar are being reciprocated by motor 152.

The foregoing describes a cross-feed facing

- 14 -

unit having a rotatably driven spindle across the face of which a tool carrying slide is diametrically movable under numerical control to permit completion of profiling and contouring operations.

Although the illustrative embodiment of the invention has been described in considerable detail for the purpose of fully disclosing a practical operative structure incorporating the invention, it is to be understood that the particular apparatus shown and described is intended to be illustrative only and that the various novel features of the invention may be incorporated in other structural forms without departing from the spirit and scope of the invention.

- 15 -

CLAIMS

1. A cross-feed facing unit adopted to be mounted on a numerically controlled machine tool in operating position to be driven by a drive unit (14) of the machine tool; comprising a tool supporting head, power means connection to move said head into the operating position; and a rotary spindle (40) journaled in said head and connected to be rotated by the operation of said drive unit when said head is moved into its operating position on the machine tool; characterized by a slide (97) mounted on the end of said spindle (40) in a plane transverse to the axis of rotation of said spindle so that it rotates with said spindle, said slide (97) being movable in a rectilinear path relative to the axis of said spindle (40); a turning tool (98) secured to said slide (97) for movement therewith so that it can be rotated in an orbit to perform a turning operation on a workpiece; power means connected to actuate said slide (97) in its rectilinear path to adjust the position of said turning tool relative to the axis of said spindle for changing the diameter of its orbit; and means coupling said power means to the numerical control of the machine tool so that the movement of said slide can be adjusted automatically.

2. The cross-feed facing unit according to claim 1 further including a housing (36) for mounting said slide (97) to the end of said spindle (40), said housing (36) including a circular plate (85) fastened to the end of said spindle (40), said plate having a channel (92) inscribed diametrically across said plate so as to be in communication with a bore (78) through said spindle (40); a pair of ways (95a, 95b) fastened in said channel (92) in spaced apart parallelism for abutment with said slide (97); and a pair of guides (99a,99b) each fastened to said plate so as to overlie one of the sides of the said channel for retaining said slide (97) in said channel (92).

0060453

3.  The cross-feed facing unit according to claim 1, characterized in that said power means for actuating said slide (97) comprises a toothed rack (102) fastened to the undersurface of said slide (97) so as to overlie said spindle (40); a sleeve (80) disposed in a bore (78) of said spindle (40) adjacent to said spindle end; a first pinion gear (106a) rotatably journaled in said sleeve (80) perpendicular to the axis of spindle rotation for meshing engagement with said toothed rack (102) on said slide (97); a second pinion gear (106d) rotatably journaled in said sleeve (80) parallel to, but distal from, said first pinion gear (106a); at least one intermediate pinion gear (106b, 106c) rotatably journaled in said sleeve in alignment with said first pinion gear (106a) and parallel to said second pinion gear (106d) for transmitting energy from said second pinion gear (106d) to said first pinion gear (106a); and means (108) partly disposed in said bore (80) of said spindle (40) for rotatably driving said second pinion gear (106d) journaled in said sleeve to transmit rotational energy to said first pinion gear (106a) through said intermediate gear (106b or 106c) to bias said slide diametrically across said housing (36).

4.  The cross-feed facing unit according to claim 3, characterized in that said means for rotatably driving said second pinion gear (106d) comprises a hollow bore bar (112) slidably disposed in said head coaxial with said spindle (40) for transverse movement along the axis of spindle rotation, said hollow bore bar (112) having a set of parallel spaced apart teeth (120) inscribed in the periphery thereof, each tooth being perpendicular to the axis of bar movement; an elongate drawbar (108) rotatably journaled in the bore of said hollow bore bar (112) and extending therefrom through said spindle (40) into said sleeve (80), said drawbar (108) having a toothed rack (110) on the end thereof distal from said hollow bore bar (112) for meshing engagement with

0060453

said second pinion gear (106d); and means under numerical control for reciprocating said hollow bore bar (112) and said drawbar (108) along their common axis to rotatably drive said second pinion gear (106d) to bias said slide (97) diametrically across said housing.

5. The cross-feed facing unit according to claim 4 wherein said means for reciprocating said hollow bore bar (112) and said drawbar (108) comprises a motor (152) under numerical control for supplying rotational energy; and a transmission (124) having an input shaft (126) coupled to said motor (152) and having an output shaft (123) journaled in said frame (28) for rotation about an axis perpendicular to the axis of hollow bore, bar and drawbar transverse movement, said output shaft (123) carrying a gear (122) thereon in meshing engagement with the teeth (120) on said hollow bore bar (112) for reciprocating said hollow bore bar (112) and said drawbar (108) along their common axis in accordance with input shaft rotation by said motor (152).

6. In combination with a multiple spindle head machine tool having a base on which a turntable is indexably rotatable about a centrally located power station for positioning one of a plurality of spindle heads, each mounted on the turntable in spaced apart relationship adjacent to the power station, a cross-feed facing unit for performing profiling and contouring operations characterized by a frame (28) fastened on the machine tool turntable (12) in spaced apart relationship with each of the spindle heads mounted thereon; a spindle (40) rotatably journaled into said frame (28) and extending therebeyond so as to lie along a turntable radii; a cross-feed facing cutting tool carrying slide (97) movable across the end of said spindle (40) in a direction transverse to the path of spindle rotation; spindle driver means rotatably journaled into said frame (28) parallel to said spindle for transmitting rotational energy from said power station to said spindle;

and slide driver means partly disposed in the bore (78) of said spindle (40) for reciprocating said cross-feed facing tool-carrying slide (97) diametrically across said housing under numerical control.

7. The combination of claim 6, characterized by a housing (36) for mounting said slide (97) to the end of said spindle (40), said housing (36) including a circular plate (85) fastened to the end of said spindle (40), said plate having a channel (92) inscribed diametrically across said plate so as to be in communication with said bore through said spindle (40); a pair of ways (95a, 95b) fastened in said channel (92) in spaced apart parallelism for abutment with said slide (97); and a pair of guides (99a, 99b) each fastened to said plate (85) so as to overlie one of the sides of the said channel (92) for retaining said slide (97) in said channel (92).

8. The combination according to claim 6 or 7, characterized in that said slide driver means comprises a toothed rack (102) fastened to the undersurface of said cross-feed facing cutting tool-carrying slide (97) so as to overlie the bore (78) through said spindle (40); a sleeve (80) disposed in the bore (78) of said spindle (40); a first pinion gear (106a) rotatably journaled in said sleeve (80) perpendicular to the axis of spindle rotation for meshing engagement with said toothed rack (102) on said slide (97); a second pinion gear (106d) rotatably journaled in said sleeve (80) parallel to, but distal from, said first pinion gear (106a); at least one intermediate pinion gear (106b, 106c) rotatably journaled in said sleeve (80) in alignment with said first pinion gear (106a) and parallel to said second pinion gear (106d) for transmitting energy from said second pinion gear (106d) to said first pinion gear (106a); and means, partly disposed in said bore (78) of said spindle (40) for rotatably driving said second pinion gear (106 ) journaled in said sleeve (80) to transmit rotational energy to said first pinion gear (106a) through said intermediate gear (106b, 106c) to bias said slide (97) diametrically across said housing (36).

9. The combination according to claim 8, characterized in that said means for rotatably driving said second pinion gear (106d) comprises a hollow bore bar (112) slidably disposed in said frame (28) coaxial with said spindle (40) for transverse movement along the axis of spindle rotation, said hollow bore bar (112) having a set of parallel spaced apart teeth (120) inscribed in the periphery thereof, each tooth being perpendicular to the axis of bar movement; an elongate drawbar (108) rotatably journaled in the bore of said hollow bore bar (112) and extending therefrom through said spindle (40) into said sleeve (80), said drawbar (108) having a toothed rack (110) on the end thereof distal from said hollow bore bar (112) for meshing engagement with said second pinion gear (106d) and means, under numerical control for reciprocating said hollow bore bar (112) and said drawbar (108) transversely along their common axis to rotatably drive said second pinion gear (106d) to bias said slide (97) diametrically across said housing (36).

10. The combination according to claim 9, characterized in that said means for reciprocating said hollow bore bar (112) and said drawbar (108) comprises a motor (152) under numerical control for supplying rotational energy; and a transmission (124) having an input shaft (126) coupled to said motor (152) and having an output shaft (123) journaled in said frame (28) for rotation about an axis perpendicular to the path of bar and drawbar movement, said output shaft (123) carrying a gear (122) in meshing engagement with the teeth (120) on said hollow bore bar (112) for reciprocating said hollow bore bar (112) and drawbar (108) in accordance with input shaft rotation by said motor (152).

# FIG. I

0060453

FIG. 2

2/5

0060453

FIG. 3

FIG. 7

3/5

0060453

# FIG. 6

FIG. 5

# FIG. 4

4/5

0060453

# FIG. 8

N/C CONTROL CIRCUIT

SLIDE POSITION COMMANDS